# EUROPEAN PATENT APPLICATION

(11) **EP 0 706 126 A1**
(43) Date of publication of application: **10.04.1996**
(21) Application number: 94480096.0
(22) Date of filing: 07.10.1994
(51) Int. Cl.: G06F 9/46, G06F 9/32

(54) **Multi-priority level scheduler**

(71) Applicant: International Business Machines Corporation, Armonk, N.Y. 10504 (US)
(72) Inventor: Champalle, Luc, F-06200 Nice (FR); Munier, Jean-Marie, F-06800 Cagnes-sur-Mer (FR); Spagnol, Victor, F-06800 Cagnes-Sur-Mer (FR); Gallet, Georges, F-06490 Tourrettes sur Loup (FR); Pauporte, André, F-06480 La Colle sur Loup (FR)
(74) Representative: Lattard, Nicole

(57) **Abstract**

Multi-priority level scheduler adapted to initialize a task amongst a plurality of tasks defined by an associated routine, and including an unconditional jump instruction (GOTOM) executed in a single machine cycle for branching the scheduler to the first instruction of the routine associated to the highest priority task to be performed amongst the plurality of tasks where each task is assigned to a predetermined active bit position of a register (72), the contents of the position being set to 1 if the corresponding task is to be performed, and the execution of the unconditional jump instruction (GOTOM) consisting in determining in a single machine cycle the first active bit position of the register set to 1 from one predetermined end (right or left), the first bit position set to 1 corresponding to the highest priority task to be performed.

## Description

### Field of the invention

The present invention relates generally to the multiple task processing used in an information processing system and particularly to a scheduler providing access to a low level task with a minimum time penalty in a high speed data transmission network.

### Background art

The telecommunication environment is in full evolution and has changed considerably this recent years. The principal reason has been the spectacular progress realized in the communication technology due to the maturing of fiber optical transmission (high speed rates can now be sustained with very low bit error rates) and the universal use of digital technologies within private and public telecommunications networks.

In relation with these new emerging technologies, the offer of the telecommunication companies, public or private, are evolving. Indeed, the emergence of high speed transmissions entails an explosion in the high bandwidth connectivity ; the increase of the communication capacity generates more attractive tariffs ; a higher flexibility is offered to the users to manage their growth through a wide range of connectivity options, an efficient bandwidth management and the support of new media ; and once sampled and digitally encoded, voice, video and image derived data can be merged with pure data for a common and transparent transport.

In a first step, networks were primarily deployed with TDM (Time Division Multiplexing) technology to achieve cost savings through line aggregation. These systems easily supported the fixed bandwidth requirements of host/terminal computing and 64 Kbps PCM (Pulse Code Modulation) voice traffic.

The data transmission is now evolving with a specific focus on applications and by integrating a fundamental shift in the customer traffic profile. Driven by the growth of workstations, the local area networks (LAN) interconnection, the distributed processing between workstations and super computers, the new applications and the integration of various and often conflicting structures - hierarchical versus peer to peer, wide (WAN) versus local (LAN) area networks, voice versus data - the data profile has become higher in bandwidth, bursting, non deterministic and requires more connectivity. Based on the above, it is clear that there is strong requirement to support distributed computing applications across high speed backbones that may be carrying LAN traffic, voice, video, and traffic among channel attached hosts, business workstations, engineering workstations, terminals, and small to intermediate file servers. This traffic reflects a heterogeneous mix of : end user network protocols, and real time (steady stream traffic such as voice and video) and non real time (bursty nature traffic such as interactive data) transmissions.

The vision of a high-speed protocol-agile backbone network is the driver for the emergence of fast packet switching network architecture in which data, voice, and video information are digitally encoded, chopped into small packets and transmitted through a common set of nodes and links.

The key requirement of these new architectures is to reduce the end-to-end delay in order to satisfy real time delivery constraints and to achieve the necessary high nodal throughput for the transport of voice and video. Increases in link speeds have not been matched by proportionate increases in the processing speeds of communication nodes and the fundamental challenge for high speed networks is to minimize the packet processing time within each node.

In order to minimize the processing time and to take full advantage of the high speed/low error rate technologies, most of the transport functions provided by the new high bandwidth network architectures are performed on an end-to-end basis. This includes the flow control and error recovery for data, the packetization and reassembly for voice and video.

The efficient transport of mixed traffic streams on very high speed lines means for each communication node of the network a set of requirements in term of performance and resource consumption which can be summarized as follows :
- a very short packet processing time,
- a very high throughput,
- an efficient queue and buffer management,
- a limited number of instructions per packet,
- a minimum impact of the control flow on the user traffic, and
- a very large flexibility to support a wide range of connectivity options.

The high bandwidth dictates the need of specialized hardware to support very fast packet handling and control protocols, and to satisfy the real time transmission needs of the voice and video traffic. The processing time being the main bottleneck in high speed networks, most of the communication nodes today are built around high speed switching hardware to off-load the routing packet handling and routing functions from the processor.

However, on equal performances, a software approach represents the most adequate solution for each node to meet the connectivity and flexibility requirements and to optimize the manufacturing and adaptation costs. The line adapters, are based on a common hardware design and are configured by means of a specific programming to execute either the access point or inter nodal transport functions.

The throughput of a communication adapter is defined as the total time required to handle a data packet from the input to the output. It depends on the hardware and on the processor capabilities, but the main throughput limiting factor is the packet processing time and the processing time is directly related to the number of instructions required to handle a packet. The operations on the packets can be divided in two categories.
- the background process with the operations of packet routing, assembling/disassembling, formatting, bandwidth management, priority, ... This process is designed according to the adapter function, but in the same application, the background process is identical for all packets independently of their size.
- the buffering process with the interrupt routines. This operation is generic for all adapter types. The processing time required for this operation is directly proportional to the packet length.

The interrupt routines are the way real time is supported by the processor. They must be as short as possible to avoid the overrun on the input device and the underrun on the output device. They command the performance of the adapter in term of data throughput (bits per second). For packets of infinite length, the background process disappears and the throughput bottleneck is the interrupt response time which depends on the queuing and the dequeuing operations.

In another way, to maximize the packet throughput (number of packets per seconds that the adapter is able to transmit), the number of instructions required by the background process must be reduced to a minimum.

Further to these background tasks, which are sometimes called the "steady state" tasks, the adapter has to process the low level tasks such as housekeeping tasks (tasks of releasing any frame or packet pool which is in reassembly state for a very long time because the message has failed).

These tasks being active less frequently than the steady state tasks, they are performed with the lowest priority at the end of the steady state process of a packet unless they are bypassed for the program.

All the low level tasks are normally initialized by a service scheduler testing a bit which corresponds to the task and which has been set by a request to perform the task. If the bit for the highest priority task is not set the scheduler tests the bit corresponding to the low level task which has the priority immediately less than the highest priority level task, and so on until a set bit is tested by the scheduler. Assuming that there are n low level tasks, such a process can take from i+t machine cycles to i+n.t machine cycles where i is the number of test initialization cycles, n the number of test operations and t the number of cycles per test operation, which can represent an important throughput limiting factor. Thus, with i=3, t=2 et n=7, the required number of machine cycles is between 5 and 17.

### Summary of the invention

It is therefore an object of the invention to improve the processing time in accessing low level tasks.

It is a further object of the invention to provide a scheduler which is capable of branching in a single machine cycle to the routine associated to any low level task to be performed in a high speed data transmission network.

Accordingly, the invention is directed to a multi-priority level scheduler adapted to initialize a task amongst a plurality of tasks such as the low level tasks at a node of a high speed data transmission network, said scheduler including an unconditional jump instruction executed in a single machine cycle for branching the scheduler to the first instruction of the routine associated to the highest priority task to be performed.

In the scheduler according to the invention, each task is assigned to a predetermined bit position of a register, the contents of the register bit position being set to 1 if the corresponding task is to be performed. The execution of the unconditional jump instruction consists in determining in a single machine cycle the first bit position set to 1 in the register from one predetermined end (right or left) of the register, this first bit position set to 1 corresponding to the highest priority task to be performed.

The execution of the unconditional jump instruction causes the scheduler to be branched directly to an entry of a table containing the first instruction of the routine to be executed.

### Brief description of the drawings

The above set forth and other objects or features of the invention will be made more apparent in the following detailed description of the best embodiment when read in conjunction with the attached drawings.

Fig.1 is a schematic block-diagram of a node in a high speed data transmission network implementing a scheduler according to the invention.

Fig.2 is a flow-chart representing the different kinds of tasks to be performed in a node illustrated in Fig.1.

Fig.3 is a flow-chart of the sequence of steps necessary for the scheduler to initialize a task amongst the low level tasks by using a conventional way.

Fig.4 represents schematically the contents of a register used to execute in a single machine cycle the unconditional jump instruction according to the invention.

Fig.5 is a block-diagram of the logic circuitry used in combination with the register illustrated in Fig.4 to execute the unconditional jump instruction.

Fig.6 is a block-diagram representing an example of a multilevel scheduler wherein the unconditional jump instruction is executed by using several registers similar to the register illustrated in Fig.4.

### Detailed description of the invention

A preferred embodiment to implement the invention is a high speed data transmission system wherein data are transmitted in a network from a source end node to a destination end node by the intermediary of switching nodes. Each node is provided with adapters, port adapters for the end nodes and trunk adapters for the switching nodes. Port and trunk adapters present the same architecture and their functional differentiation is realized through a specific programming. However, even using the most efficient general purpose microprocessor today available on the market, the experience shows that it is very difficult to reach the desired level of performance in terms of number of switched packets per second. This is the reason why the control of each adapter has been shared between two processors : a specific purpose processor (SPP) optimized for the packet switching and a general purpose processor (GPP) in charge of the adapter management.

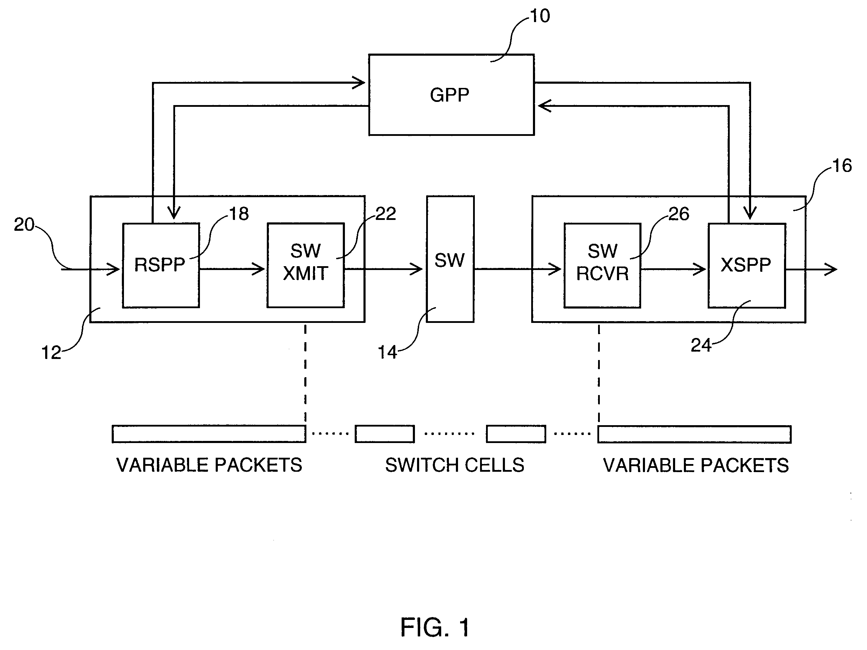

As shown in Fig.1, each adapter comprises a general purpose processor (GPP) 10 implementing the adapter and network control operations and whose programming depends on the selected port or trunk adapter function ; a receive adapter 12 for implementing the port or trunk functions of checking the header of the packet ; a switch 14 for switching the incoming cells into outgoing cells ; and a transmit adapter 16 for implementing the functions of checking the cell header, re-assembling the switch cells into packets and performing the trunk or port functions.

Receive adapter 12 comprises a receive specific purpose processor (RSPP) 18 handling the received steady state packet flow from the input line 20 and forwarding the control packets to GPP 10 ; and a switch transmit adapter 22 for handling the data flow transferred under the control of RSPP 18, segmenting this flow in fixed length cells and generating an appropriate switch routing header.

Transmit adapter 16 comprises a transmit specific purpose processor (XSPP) 24 similar to RSPP 18 for handling the steady state data and forwarding the control flow to GPP 10 ; and a switch receive adapter 26 for handling the flow coming from switch 14, checking the switch header and re-assembling the fixed length cells into variable packets.

It must be noted that, though the block-diagram illustrated in Fig. 1 shows a single GPP, it would be possible to associate a GPP with receive adapter 12 and another GPP with transmit adapter 16.

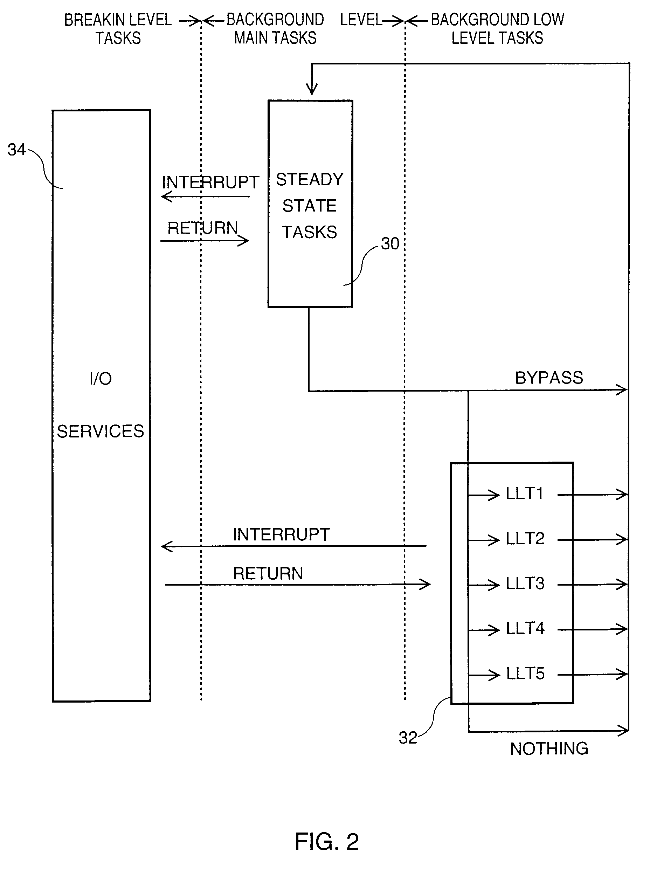

The whole process performed by each SPP is illustrated in Fig.2. The background process including the operations of packet routing, assembling, disassembling, formatting which is identical for all packets independently of their size, is carried out by either the receive specific purpose processor (RSPP) or the transmit specific purpose processor (XSPP). Such a process represents the Steady state tasks 30 which are the main tasks carried out by the processor.

Other background tasks also carried out by RSPP or XSPP are the low level priority tasks 32. Unless they are bypassed by the scheduler because steady state tasks are waiting to be made, one low level task LLT1, ..., LLT5 is normally performed by the processor at each background process run. Sometimes, there is no LTT to be performed and the process loops back to the beginning of the steady state tasks.

The steady state tasks as well as the low level tasks can be interrupted at every time by the I/O services 34 which have posted an interruption. The interrupt routines are used to handle the buffering process consisting in storing data packets in buffers, queuing the packet pointers, dequeuing the packet pointers, releasing the buffers, processing the ends of message (EOM) or the ends of buffer (EOB). All these tasks called the breakin level tasks are processed in a time directly proportional to the packet length.

### LOW LEVEL TASKS

### Bypass:

Data are exchanged between the RSPP and the switch transmit adapter or between the switch receive adapter and the XSPP at a speed of 266 Mbps, whereas data are exchanged between RSPP or XSPP and the respective line interface adapter at a speed of 52 Mbps. Therefore, in case of bursty traffic (a long burst), data are accumulated in the buffers of the processor and the probability of congesting the processor, especially in XSPP processor, increases with the length of the data burst. In such a case, maximum of computing power must be dedicated to steady state tasks. Accordingly, the control unit of the processor tries to prevent any congestion by setting a LL-bypass bit when necessary.

### Release data structure tasks

There are two data structures to be considered: the packet structure concatenating one to several buffers of data, and the frame structure concatenating one to several packets of data.

In the steady state process, while reassembling data coming from the switch receive adapter into packets, then packets into frames, some packets/frames may be declared invalids (packet sequence error, frame for inexisting virtual connection, ...). Invalid frames/packets are very rare comparatively to the valid ones. For this reason, instead of releasing resources (frame structures, packet structures, buffers) to free pools in the steady state tasks (that would take a lot of machine cycles), structure pointers are stored into specific queues REL1 Queue (for packet structure), or REL2 Queue (for frame structure). REL1 bit or REL2 bit is set for such a situation to indicate that the queues are to be processed by the low level priority tasks.

### GPP tasks

The general purpose processor tasks are in charge of the communication between the processor RSPP or XSPP and the general purpose processor (GPP). GPP sends control packets over the network, initializes routing tables in the SPP, initializes the line and switch interface adapters... As the throughput between GPP and SPP is low with regard to the data communication traffic, GPP routines are given the control less often than the steady state tasks. The ratio being 1/8, that means the GPP tasks are given the control approximately every 8 iterations of the steady state tasks. Thus, when the main tasks (steady state) have nothing to do, the GPP tasks are executed every 3 µs; but when the workload of main tasks is high, GPP tasks are not executed more than once every 25 µs.

Nevertheless, GPP tasks can be speeded up (8 times faster) by setting ON a GPP Direct (GPPD) bit of the low level tasks. Such a GPPD bit is set by GPP tasks themselves.

### Global resource control tasks

Global resources are the buffers, the packet structures (free packet pool) and the frame structures (free frame pool). They are permanently controlled and the level of each pool of free packets or free frames gives an indication of the SPP congestion status, of the data buffering (waiting for transmission). These statistics are sent (on demand) to the GPP which integrates them.

### Housekeeping tasks

The function of the housekeeping tasks is to release any "pending" resource, i. e. any frame or packet structure which is in reassembly state for a very long time (such a situation should never occur in normal traffic). For example, a connection may drop while packets of the same frame for that connection are not all arrived. The frame is pending, waiting for the end of data which will never arrive. To prevent resources of SPP from staying in such a pending state, every time a piece of data enters the SPP, a time stamp is adjoined to it. The housekeeping tasks consist in scanning periodically all these time stamps and to decide for old ones, to discard related data and to release the pending structures to their respective free pools.

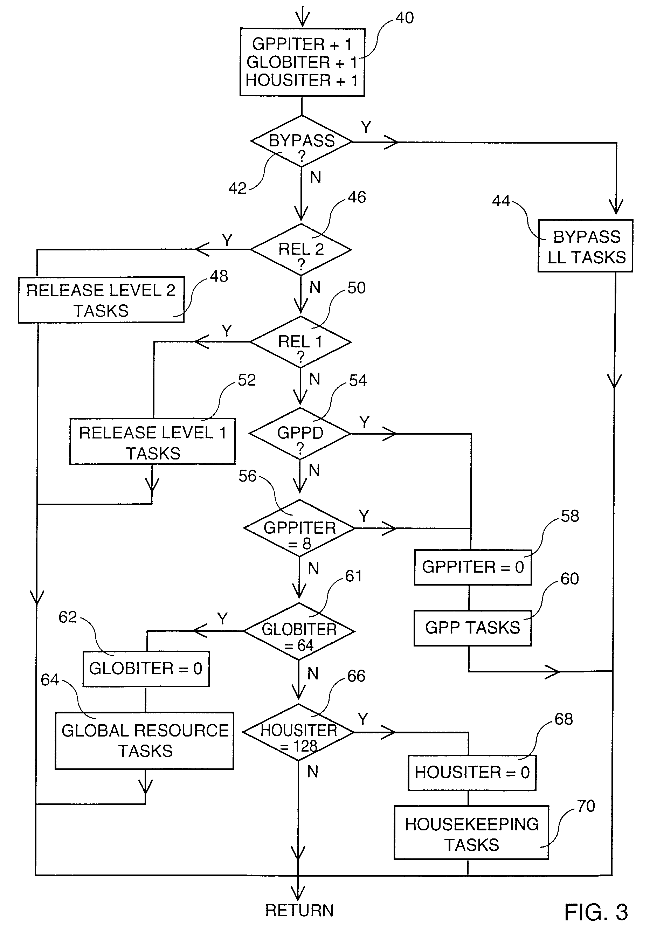

Fig.3 represents a flow diagram of the low level tasks processing by using a conventional process. As shown, the tasks such as GPP, global resource control or housekeeping are pseudo-periodic, i. e. executed once for approximately N executions of the steady state process, with N being 8 for the GPP tasks, 64 for the global resource control tasks and 128 for the housekeeping tasks. Accordingly, three counters, GPPITER, GLOBITER, and HOUSITER are first incremented (40). Then, the BYPASS bit is tested (42). If it is set to 1, the LL tasks are bypassed (44). If not, the REL2 and REL1 bits are successively tested (46, 50) and for each one, the release tasks are carried out (48, 52) only if the corresponding bit, REL2 or REL1, is set to 1. After that, the GPPD bit is tested (54) to check if it has been set to 1 as explained hereabove. If not, the contents of counter GPPITER is compared to 8 (56). If the GPPD bit is set to 1 or counter GPPITER has reached 8, counter GPPITER is reset to 0 (58) and the GPP tasks are executed (60). Then, the contents of counter GLOBITER are compared to 64 (61). If the comparison is positive, counter GLOBITER is reset to 0 (62) and the global resource control tasks are executed (64). If not, counter HOUSITER is tested (66) to check if the contents have reached 128. If so, counter HOUSITER is reset to 0 (68) and the housekeeping tasks are carried out (70). In all cases, after any LL tasks are executed, the process returns to the steady state process.

It is obvious that the above conventional process needs several machine cycles to execute any one of the LL tasks. Thus, 17 machine cycles are necessary to perform the housekeeping tasks when no other preceding tasks are requested. With the trend for the data processing to be more and more sophisticated, it is not impossible to have to process 20 or 30 kinds of low level tasks. In such a case , it would need 43 or 63 machine cycles before beginning the processing of the lowest priority level tasks.

### THE UNCONDITIONAL MULTIPLE JUMP INSTRUCTION

The scheduler according to the invention is such that all the steps required to execute one of the low level tasks illustrated in fig. 3, are replaced by only one instruction which is executed in one machine cycle only.

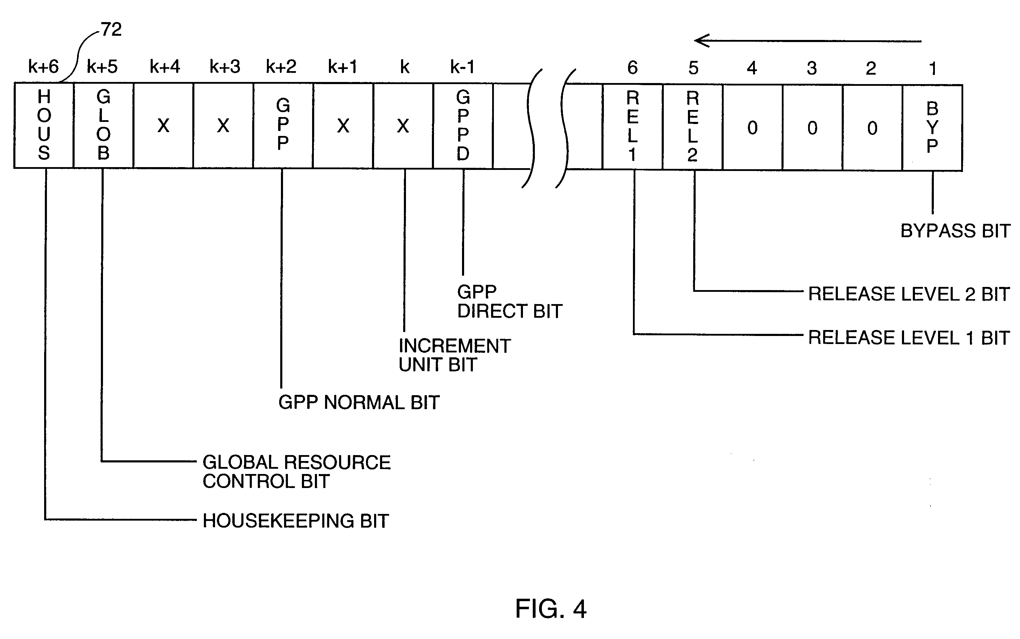

Each time the steady state tasks are processed, an unconditional multiple jump instruction (GOTOM) is executed by the scheduler. The execution of this instruction consists in scanning a register 72 illustrated in Fig. 4 in a single machine cycle. According to the detection of a first bit set to 1 corresponding to the higher priority level task amongst the low level tasks, the scheduler is branched to the first instruction of the routine to be run for the execution of said higher priority level task.

As shown in Fig 4, the GOTOM register is scanned from right to left. The first bit, at bit position 1 of the register, is the BYPASS bit which can be set by the SPP in case of accumulation of data in the buffers. When the BYPASS bit is set to 1, no low level task is carried out and the program returns to the steady state tasks.

Bit positions 5 and 6 of the register are respectively occupied by REL2 bit and REL1 bit. This means that, when REL2 bit is set to 1, the release level 2 tasks are executed. For the execution of the release level 1 tasks, it is necessary that REL 2 bit = 0 and REL1 bit = 1. It must be noted that REL2 bit is located before REL1 bit because the associated release level 2 tasks have a higher priority level than release level 1 tasks. As Such tasks, which have the highest priority level amongst the low level tasks, are rarely requested, the frequency of occurrence representing less than 1% of the total number of GOTOM executions.

In Fig.4, bit positions 2,3,4 contain zero bits. This means that these bit positions are always zero and that the detection of any 1 in one of bit positions 2, 3, 4 would branch to an error detection. Such bit positions are provided in case other low level tasks of a higher priority level than the release level 1 or 2 tasks would have to be added. Likewise, though they have not been represented in Fig.4, other register bit positions after REL1 can be reserved (i. e. containing zero bits). For other Low level tasks to be considered.

Then, bit position k-1 of the register contains the GPPD bit which can be set by the GPP tasks to speed up the performance of the GPP tasks. If this bit is set to 1, the program branches to the routine associated to the GPP tasks.

Bit position k of the register is occupied by an increment unit bit. This means that, at each access to this register bit position, the increment unit bit is incremented by 1 and the carry is propagated to bit position k+1 and subsequent bit positions up to bit position k+6 as incrementation goes on. Thus, the GPP bit (position k+2) will be set to 1 every 23 = 8 incrementations, the global resource control bit (bit position k+5) will be set to 1 every 26 = 64 incrementations, and the housekeeping bit (bit position k+6) will be set to 1 every 27 = 128 incrementations. It must be noted that the bits X occupying bit positions k, k+1, k+3, k+4 are considered like bypass bits when the register is scanned. Therefore, the detection of a bit set to 1 in bit positions GPP, GLOB, and HOUS causes the program to be branched to a routine to be executed, whereas the detection of a bit 1 in position k, k+1, k+3 or k+4 causes the scheduler to return to the main tasks.

It should be noted that the GOTOM register contains two kinds of bit positions. The first kind, from 1 to k-1, are event-dependent whereas the second kind, from k to k+6, are pseudo-periodic. In order to speed up or slow down the execution of such pseudo-periodic tasks, the incrementation of the counter formed by register bit positions from k to k+6 may be dynamically changed. For example, when it is required to speed up the execution of such tasks, bit k of the GOTOM register illustrated in Fig. 4 is set to zero and the first increment bit of the counter becomes bit k+1. Accordingly, the GPP task will be executed approximately every 4 iterations and not every 8 iterations as previously. Conversely, when it is required to slow down the execution of the tasks, the first increment bit must be k-1. In a general way, decreasing the number of increment bits results in speeding up the frequency at which the pseudo-periodic tasks are executed and increasing the number of increment bits results in slowing down this frequency.

Note that a single BYPASS bit has been placed at the first register bit position in Fig.4. However, it is easy and judicious to have other BYPASS bits located in other bit positions of the register. Thus, another BYPASS bit could be placed at bit position 7 of the register, after REL1 bit, meaning that, except the release level 1 or 2 tasks, all the low level tasks have to be bypassed.

Although the register illustrated in Fig.4 is scanned from right to left, it is possible to have the register scanned from left to right. In the first case, the multiple jump instruction is called a GOTOMR instruction; in the second case, it is called a GOTOML instruction.

From the above, it is clear that the execution of a GOTOM instruction consists in scanning the register GOTOM in order to detect the first bit set to 1, from right to left (GOTOMR) or from left to right (GOTOML), and to branch to the first instruction of the routine associated to this bit (and also incrementing, in each case, the counter formed by a plurality of adjacent bits positions of the register whatever there is a preceding bit position of the register which is set to 1). Such operations take only a single machine cycle.

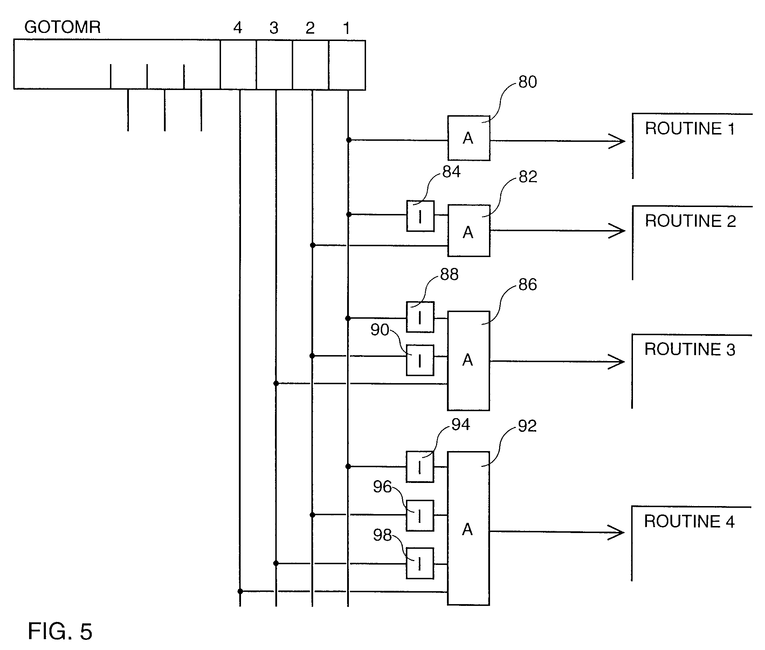

The logic arrangement used to implement a GOTOM instruction is illustrated in Fig.5. In reference to the GOTOM register represented in this figure, let us assume that execution of a GOTOM instruction is performed. An AND circuit is associated with each register bit position. The AND circuit associated with bit position n has n inputs which are connected respectively to each of the bit positions. But, whereas bit position n is directly connected to an input of the AND circuit, the other bit positions are connected by means of an inverter. Thus, AND circuit 82 has two inputs, one connected by means of inverter 84 to bit position 1 whereas the other input is connected directly to bit position 2. Therefore, if, when scanning the register bits from right to left, the first bit set to 1 is the bit of register position 2, AND circuit 82 is enabled and the program is branched to the first instruction of Routine 2 corresponding to the LL task associated with the register bit position 2 bit. Likewise, AND circuit 86 has three inputs, two of them being connected to register bit positions 1 and 2 thru inverters 88 and 90 respectively, the third one being connected directly to bit position 3. Therefore, if the first bit set to 1 is the bit position 3 bit, AND circuit 86 is enabled and the program is branched to Routine 3 corresponding to the LL task associated with the bit position 3 bit.

In the same manner, bit position 4 is associated to Routine 4 by means of AND circuit 92 which has 4 inputs, three of which being connected to register bit positions 1, 2 and 3 thru inverters 94, 96, and 98 respectively, and the last input being connected directly to register bit position 4.

Bit position 1 of the register is connected directly to the first instruction of Routine 1. However, the connection is represented by means of AND circuit 80. Indeed, it is necessary to use an AND circuit, even for the first register bit position, because each AND circuit has an enable input (not shown in Fig 5) which is activated when the GOTOMR instruction is executed.

Although they are not shown in Fig. 5, all the register bit positions corresponding to a LL task are associated to an AND circuit and therefore to a Routine, in the same way as explained above for the first bit positions. Of course, register bit positions not yet assigned contain zero bits, and are not associated with a routine.

In an alternative, the outputs of the AND circuits are addressing the entries of a table, each entry containing the first instruction of the routine to be executed when the entry is selected.

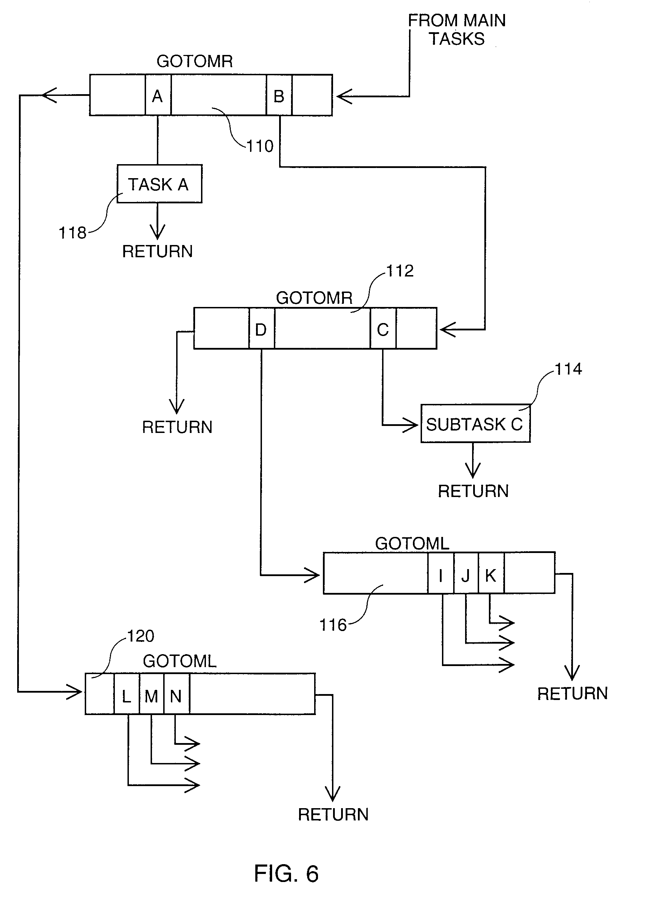

A particular use of the multiple jump instruction according to the invention is a complex scheduler wherein a plurality of GOTOM registers are utilized as illustrated in Fig.6. First, during execution of a GOTOMR instruction, a first register (GOTOMR) 110 is accessed. If the bit is set to 1 for task B, a second register (GOTOMR) 112 is accessed, wherein the active bit positions correspond to subtasks of task B. Thus, a bit set to 1 in bit position C of register 112 causes the processor to be branched to a routine 114 associated with subtask C. If the bit in bit position C is not set to 1, the program can be branched again to a plurality of subtasks defined in a third register (GOTOML) 116 when bit position D of register 112 is set to 1. For example, the tasks i, j, k which are activated in register 116 when the corresponding bit position is set to 1, could be subtasks within subtask D.

Coming back to register 110 of Fig.6, some register bit positions can correspond to tasks to be performed directly, such as task A 118. But, assuming that there is no bit set to 1 in register 110 (all 0's), the output of register 110 can access to another register (GOTOML) 120 instead of returning to the main tasks scheduler.

Of course, after the completion of any task (task A) or subtask (C or i, j, k or l, m, n) the scheduler returns to the steady state tasks (see Fig. 2). The architecture illustrated in Fig. 6 is interesting when the Low level tasks are divided in two or several levels. In such a case, tasks l, m, n, defined by register 120 are to be performed less frequently than the tasks defined by register 110 (A or B).

It must be noted that, when a multilevel scheduler as illustrated in Fig.6 is utilized, each of the registers accessed during the execution of the multiple jump instruction can have a different size. Thus, if the main register 110 is 32 bits long, each of the other registers 112, 116, or 120 can be 16 or 8 bits long.

To summarize, though the invention has been described in a particular application, namely the processing of low level tasks in a high speed data transmission network, such an invention is particularly adapted in all situations where decisions have to be taken or operations have to be carried out after having tested whether decisions/operations of a high priority level have not been taken/carried out previously. In all these situations, the use of the invention enables the average time of accessing a decision/operation to be considerably reduced.

## Claims

1. Multi-priority level scheduler adapted to initialize a task amongst a plurality of tasks defined by an associated routine, said tasks being independent from each other ; said scheduler including an unconditional jump instruction (GOTOM) executed in a single machine cycle for branching said scheduler to the first instruction of the routine associated to the highest priority task to be performed amongst said plurality of tasks.

2. Multi-priority level scheduler according to claim 1, wherein each task of said plurality of tasks is assigned to a predetermined active bit position of a first register (72), the contents of said bit position being set to 1 if the corresponding task is to be performed, and the execution of said unconditional jump instruction (GOTOM) consists in determining in a single machine cycle the first active bit position of said register set to 1 from one predetermined end (right or left) of said register, said bit position set to 1 corresponding to the highest priority task to be performed.

3. Multi-priority level scheduler according to claim 2, wherein the first bit position at said predetermined end (right or left) of said first register (72) contains a first BYPASS bit which causes the scheduler to bypass said plurality of tasks when it is set to 1.

4. Multi-priority level scheduler according to claim 3, wherein at least another bit position of said first register (72) contains a second BYPASS bit located after bits associated to some of said plurality of tasks and before the other tasks of said plurality of tasks, whereby said other tasks are bypassed by the scheduler when said some of said plurality of tasks are not requested to be performed and said second BYPASS bit is set to 1.

5. Multi-priority level scheduler according to any one of claims 2, 3 or 4, wherein said first register (72) includes some bit positions containing 0 bits and which are reserved for new low level tasks to be added if necessary.

6. Multi-priority level scheduler according to any one of claims 2 to 5, wherein said first register (72) contains a plurality of juxtaposed bits including bits associated with some tasks to be performed on a periodic basis, said plurality of juxtaposed bits being used as a counter which is incremented every time said plurality of juxtaposed bits are scanned, whereby a task whose the associated bit is included in said plurality of juxtaposed bits is performed every time said associated bit is set to 1 by the incrementation of said counter and all preceding bits are set to zero.

7. Multi-priority level scheduler according to claim 6, wherein said counter composed of said plurality of juxtaposed bits can be dynamically changed by increasing or decreasing the number of bit positions of said counter which are not associated with said tasks, said increasing resulting in slowing down the frequency at which said tasks are performed whereas said decreasing results in speeding up said frequency.

8. Multi-priority level scheduler according to any one of claims 2 to 7, wherein said first active register bit bit position set to 1 is determined from the right of said first register (72).

9. Multi-priority level scheduler according to any one of claims 2 to 8, wherein said first active bit position of said first register (110) set to 1 corresponding to the highest priority task to be performed causes the scheduler to access a second register (112) similar to said first register and scanned in the same way, the active bit positions of said second register corresponding to subtasks of said highest priority task

10. Multi-priority level scheduler according to any one of claim 2 to 9, wherein the nth (e.g. 3) bit position of said first register (72 or 110) is associated with an AND circuit (e.g. 86) having n inputs, n-1 of these inputs being respectively connected to the n-1 bit positions preceding said nth bit position by the intermediary of an inverter (e. g. 88 and 90), and the last input being connected directly to said nth bit position, whereby said AND circuit is enabled only if said nth bit position is the first bit position of said register containing a bit set to 1 indicating that the corresponding task is to be performed.

11. Multi-priority level scheduler according to any one of the preceding claims, wherein the execution of said unconditional jump instruction (GOTOM) causes said scheduler to be branched directly to an entry of a table, said entry containing the first instruction of the routine associated to said task to be performed.

12. High speed data transmission network of the type wherein data are transmitted from a source end node to a destination end node by the intermediary of switching nodes, each node comprising an adapter for receiving or transmitting data and controlled by a processor for performing the background main tasks consisting in routing, assembling/dissembling and formatting each packet transmitted through said node, said background main tasks being completed by the processing of background low level tasks by running a multi-priority level scheduler according to any one of the preceding claims.
